# EUROPEAN PATENT APPLICATION

(11) **EP 2 075 626 A1**
(43) Date of publication of application: **01.07.2009**
(21) Application number: 08172967.5
(22) Date of filing: 29.12.2008
(51) Int. Cl.: G02F 1/13357, G02F 1/13

(54) **Liquid crystal display panel**

(30) Priority: 28.12.2007 JP 2007340815
(71) Applicant: Orion Electric Co., Ltd, Echizen-shi, Fukui 915-8555 (JP)
(72) Inventor: Watanabe, Kazuhiro, Echizen-shi Fukui 915-8555 (JP)
(74) Representative: Vossius & Partner

(57) **Abstract**

Disclosed a liquid crystal display panel including a front bezel and a middle frame. Lower ends of a diffusion plate (9) and a diffusion sheet (10) are fitted to an edge (20b) having a section substantially in a channel-like shape of a back chassis lower side plate (19b), upper ends thereof are held by mounting a middle frame (11) on a flat receiving portion provided at an edge (20a) of an upper side plate (19a) and attaching by locking hooks (37) to a groove holes, and a front bezel (13) is constituted by an upper bezel (13a), a lower bezel (13b), left and right bezels (13c and 13d), the left and the right bezels (13c and 13d) are constituted by being tacked to a side frame (8) such that a liquid crystal cell (12) is not detached, and screwed to fasten to fix to screw fastening portions (28) provided at both ends of the back chassis (5) along with both ends of the upper bezel (13a) and the lower bezel (13b).

## Description

The present invention relates to a structure of a liquid crystal display panel carrying an image display portion of a liquid crystal display apparatus, further in details, relates to a structure of assembling a liquid crystal display panel capable of being assembled simply and at low cost.

A liquid crystal display apparatus is constituted by installing various kinds of boards, a speaker, and a liquid crystal display panel or the like to an inner portion of a display portion constituted by a back face side cabinet and a front face side cabinet. Further, the liquid crystal display panel is constituted by a structure of successively attaching an outer shape part of covering upper and lower, left and right, and back faces of a light emitting part, an optical sheet of diffusing/converging light irradiated by the light emitting part, and a liquid crystal cell of displaying an image to a front face side of the light emitting part. Further, as the light emitting part, one constituted by arranging a cold cathode fluorescent tube substantially in a linear shape, or a plurality of LEDs is used to constitute a structure of holding a vicinity of an end portion of the light emitting part by the outer shape part.

The optical sheet and the liquid crystal cell are attached to the outer shape part by using holding members of respectively holding vicinities of edge portions thereof and means for supplying a power source is constituted by being connected to the light emitting part and a circuit board installed to an inner portion of a cabinet of the liquid crystal display apparatus by way of a wire member. Further, the liquid crystal cell is connected to a drive circuit board separately by way of a flexible printed wiring plate, and the drive circuit board is fixed to the liquid crystal display panel and connected to a control circuit board separately installed to the liquid crystal display apparatus. Further, there is also a liquid crystal display apparatus in which a circuit of supplying a power source and a control circuit are constituted by the same board.

Describing a structure of a holding member mentioned above in details, there is "method of fabricating display apparatus and face-like member" according to JP-A-2006-317865. According to the structure, although a liquid crystal cell can be prevented from being destructed by constituting a front bezel (holding member) of holding the liquid crystal cell by a frame member in a quadrangular shape, the front bezel constituted by the frame member in the quadrangular shape is constituted by punching and forming a flat plate, and therefore, a material of a center portion is wasted, and therefore, high cost is caused.

Further, in "liquid crystal module" according to JP-A-2006-350218, a loss of a material in fabricating is restrained by dividing a bezel (holding member) in a shape of a rectangular frame into two members, and the bezel is constituted by forming the two members into a rectangular frame shape by carrying out an operation of fastening two members into the frame by a screw. Hence, there are provided a liquid crystal panel (liquid crystal cell), a bezel in a shape of a rectangular frame (holding member for liquid crystal cell), a frame, a linear light source (light emitting part) for a back light, a reflecting sheet, and a back face plate. The bezel is divided into two members in an L-like shape, and respective divided ends of the respective members are provided with projected pieces of forming screw fastening pieces by being overlapped by each other. The two members are installed into the frame in the rectangular shape by fastening the screw fastening pieces to the frame by setscrews to form the bezel in a shape of the rectangular frame. That is, despite an L type mode of dividing the frame-like bezel in two, a molding die is complicated and large-sized, and when a size thereof is increased, the bezel is frequently deformed by being bent in transportation or in installation.

Further, in "frame structure used in back light module" according to JP-A-2006-285161, a middle frame (holding member for optical sheet) constituting the structure is constituted by a frame member in a quadrangular shape, an edge of an optical sheet mounted on a back chassis is held, and a liquid crystal cell is held by a front bezel (holding member for liquid crystal cell) by mounting a surrounding edge of the liquid crystal cell on the middle frame. Therefore, cost is increased and molding die is enlarged similar to the above-described structure.

The holding member constituting the liquid crystal display panel of the background art poses the above-described problem in this way. A problem to be resolved by the invention is constituted by the problem and the invention provides a liquid crystal display panel including a holding member fabrication of which is simple at low cost. Further, the invention provides a liquid crystal display panel alleviating color nonuniformity based on a difference of colors of the holding member and an outer shape part and preventing leakage of light to outside.

A liquid crystal display panel according to the invention is constituted by a structure of arranging a back face member on a rear side of a light emitting part, further, arranging side face members on both sides of the light emitting part, constituting an outer shape part by the back face member and the side face member, arranging the light emitting part on a side of an inner face of the outer shape part, and successively installing an optical sheet, a middle holding member of holding the optical sheet, a liquid crystal cell of displaying an image, and a front face side holding member of holding the liquid crystal cell on a front face side of the light emitting part. The back face member is constituted substantially by a trapezoidal shape in a sectional view thereof extending edge portions of two sides different from a side of attaching the side face member, and the side face member is constituted by a shape matching with the sectional shape of the back face member. Further, the liquid crystal display panel is constituted by a structure of including first holding means for holding vicinities of edge portions of two sides opposed to each other of the optical sheet at the side face member, including second holding means for holding a vicinity of an edge portion of other one side of the optical sheet at the back face member and holding a vicinity of an edge portion of a side opposed to the side of the optical sheet held by the second holding means by the middle holding member. Therefore, the optical sheet is easily attached to the outer shape part by the first holding means, the second holding means, and the middle holding member. Further, there may be constituted a structure of holding other two sides different from the two sides of the optical sheet held by the first holding means by the middle holding member.

Describing in details of the structure of holding the vicinity of the edge portion of the optical sheet by the middle holding member, it is preferable to form a single or a plurality of locking hook(s) at the middle holding member, forming a flat receiving face for mounting the optical sheet at a position of the back face member for attaching the middle holding member, and forming groove holes engaging with the formed locking hooks by a number the same as that of the locking hooks at the middle holding member. Further, it is further preferable to constitute a structure of extending both end portions of the middle holding member to overlap front face sides of the side face members contiguous to each other.

Further, describing in details of the structure of holding the vicinities of the edge portion of the optical sheet by the first holding member, it is preferable to constitute a structure of forming recess grooves on sides of inner faces opposed to each other of the side face members, forming projections fitted to the recess grooves to extend from both end edges of the optical sheet to outer sides, and holding the projections formed at the optical sheet to fit to the recess grooves formed at the side face members.

Further, describing in details of the structure of holding the vicinity of the edge portion of the optical sheet by the second holding member, it is preferable to constitute a structure of forming a foldback portion substantially in a channel-like shape in a section thereof at an end portion of the back face member and holding the vicinity by fitting the edge portion of the optical sheet to the foldback portion.

Further, when the optical part is a cold cathode fluorescent tube constituting substantially a linear shape or substantially a U-like shape, it is preferable to constitute a structure of holding both end portions of the cold cathode fluorescent tube by the side face members.

Further, the liquid crystal cell is attached after attaching the optical sheet to the outer shape part, and the liquid crystal cell is constituted by a structure of using the front face side holding member constituted by divided parts of respectively holding vicinities of respective sides thereof and pinching the vicinities of the respective sides of the liquid crystal cell by the respective front face side holding members along with the side face members, the back face member, or the middle holding member.

It is preferable for the front face side holding members to make the shapes of parts attached to positions symmetric with each other by constituting a reference by a center of the liquid crystal cell the same, further, it is preferable to provide the front face side holding member with fastening means with the back face member.

Further, the liquid crystal cell includes a drive circuit board connected from a vicinity of any one side by way of a flexible printed wiring plate constituting substantially a shape of a flat face, in order to prevent an erroneous operation of the drive circuit board by leakage of light of the light emitting part, it is preferable to form a drive circuit board fixing portion for fixing the drive circuit board to the back face member, construct a constitution for holding at least a vicinity of an edge portion of one side of the optical sheet the most proximate to the drive circuit board fixing portion by the middle holding member, and form a light blocking wall for preventing light of the light emitting part from being leaked to a side of the back face member at the middle holding member.

According to the liquid crystal display panel of the invention, with regard to holding the optical sheet at the outer shape part, there is constituted a structure of holding two sides, or three sides of the optical sheet by the first holding means, and the second holding means provided at the existing outer shape part, and holding remaining one side or two sides by the middle holding member, and therefore, in comparison with a middle frame (holding member for optical sheet) of the background art constituted by a frame member in a quadrangular shape, fabrication is simple and cost is inexpensive. Further, by constituting the front face side holding member of holding the liquid crystal cell by divided structures for respectively holding the respective sides of the liquid crystal cell, in comparison with a front bezel (holding member for liquid crystal cell) of the background art constituted by the frame member in a quadrangular shape, fabrication is easy and cost is inexpensive. Further, by making the shapes of the holding members on the front face side disposed at the positions respectively symmetric with each other by constituting the reference by the center of the liquid crystal cell the same, a die for molding can be simplified, a number of the dies can be reduced, and deformation of shape in transportation and installation can be prevented.

In addition thereto, when the front face side holding member is attached for holding the liquid crystal cell, first, by tacking two sides opposed to each other of the liquid crystal cell which are not connected with the drive circuit board by the front face side holding member, the liquid crystal cell can tackedly be fixed to the outer shape part, and in such a state, even when the liquid crystal display panel in the midst of an assembling operation is erected or reversed, the liquid crystal cell is not detached to drop from the outer shape part, and an operation of fixing the drive circuit board connected with the liquid crystal cell to the back face member can simply be carried out.

Further, by constituting the middle holding member by the structure of forming to extend both ends to overlap the front face side of the side face member, a color nonuniformity in displaying an image is prevented, further, by forming the light blocking wall at the middle holding member for holding the optical sheet, light leaked to the side of the back face member can be blocked, and the erroneous operation of the drive circuit board can be prevented.
Fig. 1 is a perspective view showing an outlook of a liquid crystal display apparatus according to an embodiment of the invention;
Fig. 2 is a disassembled perspective view showing a liquid crystal display panel constituting the liquid crystal display apparatus;
Figs. 3A and 3B are a perspective view viewing an upper bezel of a front bezel of the liquid crystal display panel from a front face side and a perspective view viewing a lower bezel of the same from a back face side, and Figs. 3C and 3D show a perspective view viewing a left bezel of the same from a front face side and a perspective view viewing a right bezel of the same from a back face side;
Figs. 4A, 4B, and 4C are perspective views showing steps of attaching the right bezel;
Fig. 5A is a partially enlarged perspective view showing a structure of tacking the right bezel, and Fig. 5B is a perspective view showing a state of tacking the left and right bezels;
Fig. 6 is a back face side perspective view showing a state of erecting the liquid crystal display panel by tacking the left and right bezels;
Fig. 7A is a perspective view showing a state before attaching the upper and lower bezels, and Fig. 7B is a partially enlarged perspective view showing a state before fastening the lower bezel by a screw;
Fig. 8 is a perspective view of an outlook showing the liquid crystal display panel attached with the upper and lower bezels;
Fig. 9 is a perspective view showing a case of attaching a diffusion plate and a diffusion sheet;
Fig. 10A is a partially enlarged perspective view showing a case of fitting projections formed at outer side ends of the diffusion plate and the diffusion sheet to recess grooves of a side frame, and Fig. 10B and Fig. 10C are partially enlarged perspective views showing a case of fitting lower ends of the diffusion plate and the diffusion sheet to edges of a lower side plate of a back chassis;
Fig. 11 is a perspective view showing a case of attaching a middle frame;
Fig. 12 is a perspective view showing a case of attaching a liquid crystal cell;
Fig. 13A and Fig. 13B show a perspective view viewing a middle frame from a front face side and a perspective view viewing the middle frame from a back face side, respectively;
Fig. 14 is a perspective view showing a state of overlapping an end portion of the middle frame on an upper face of a side frame;
Fig. 15 is a perspective view showing a flat receiving portion of upper side plate edge of the back chassis;
Fig. 16A is a partially enlarged perspective view showing a hook and an attaching face of the back chassis formed at a middle frame of a background art, and Fig. 16B is a partially enlarged perspective view showing a light blocking wall formed on a back face side of the middle frame according to the embodiment; and
Figs. 17A and 17B are partially enlarged sectional perspective views showing a state of attaching the middle frame according to the embodiment.

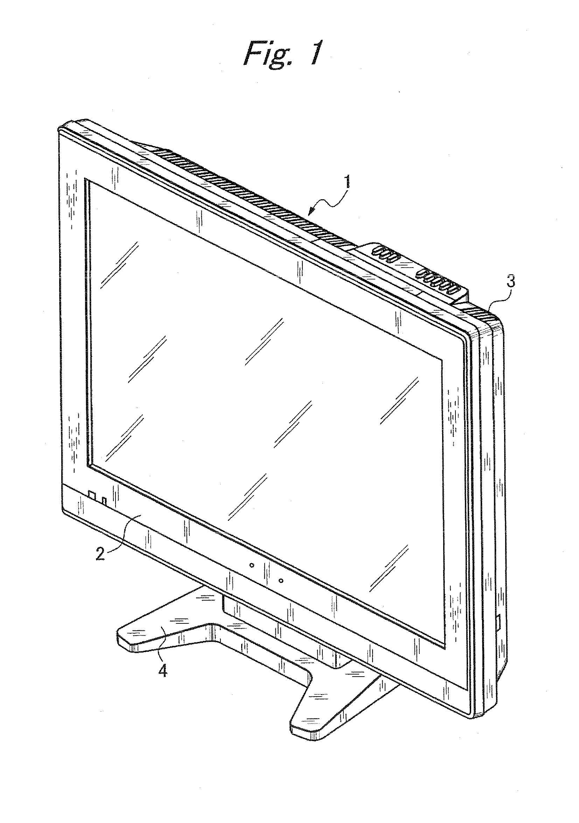

An embodiment as the best mode for carrying out the invention will be explained as follows in reference to Fig. 1 through Fig. 17. Naturally, needless to explain that the invention is applicable easily to a constitution other than explained in the embodiment within the range not contrary to the gist of the invention.

Fig. 1 shows a front face side perspective view of a liquid crystal display apparatus according to the embodiment. The liquid crystal display apparatus is erected by including a stand 4 and a display portion 1 is constituted by a front face side cabinet 2, a back face side cabinet 3, a liquid crystal display panel and other parts. Although there are various specific structures of the display portion 1, according to the invention, there is constituted a structure in which various kinds of inner constitution parts including the liquid crystal display panel are installed to the back face side cabinet 3 and finally attaching the front face side cabinet 2. Conversely, even a structure of installing various kinds of inner portion constitution parts including the liquid crystal display panel to the front face side cabinet 2 and finally attaching the back face side cabinet 3 is not contrary to the gist of the invention.

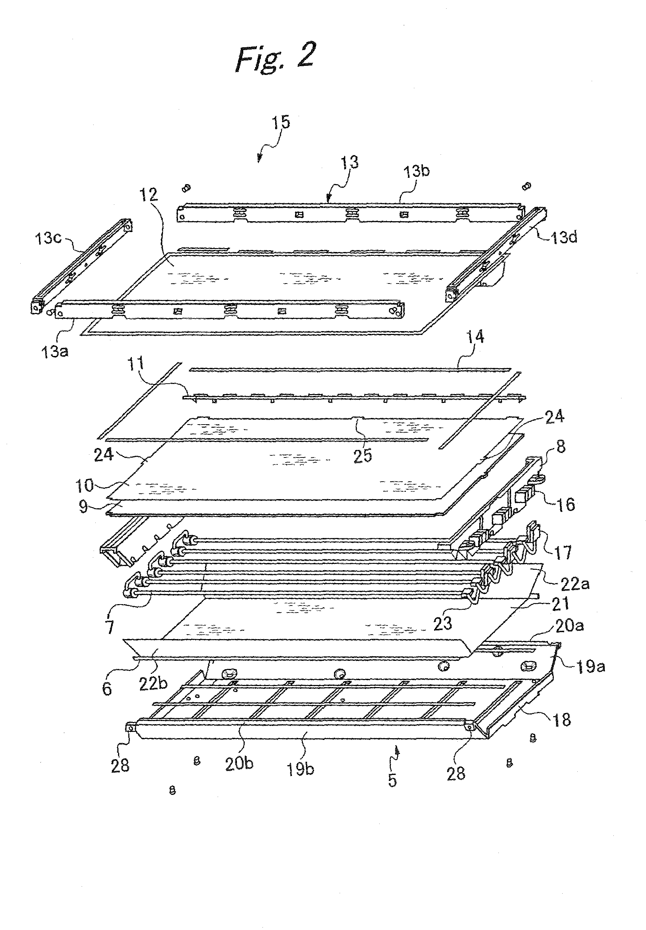

Fig. 2 is a disassembled perspective view of a liquid crystal display panel 15 according to the invention constituting the display portion 1, numeral 5 of the drawing designates a back chassis constituting a back face member, numeral 6 designates a reflecting sheet arranged on an inner face side of the back chassis 5, numeral 7 designates a cold cathode fluorescent tube constituting a light emitting part, numeral 8 designates a side frame constituting a side face member, numeral 9 designates a diffusion plate constituting a constitution member of an optical sheet, numeral 10 designates a diffusion sheet constituting a constitution member of the optical sheet similarly, numeral 11 designates a middle frame constituting a middle holding member, numeral 12 designates a liquid crystal cell, numeral 13 designates a front bezel constituting a front face side holding member, numeral 14 designates a rubber member attached to faces of the back chassis 5, the side frame 8, and of the middle frame 11 for mounting the liquid crystal cell 12. Further, although according to the embodiment, the optical sheet is constituted by the diffusion plate 9 and the diffusion sheet 10, the constitution of the optical sheet is not limited to a constitution of two parts of the diffusion plate 9 having a function of diffusing light and the diffusion sheet 10 having functions of diffusing light and converging light. Although according to the embodiment, the optical sheet is constituted by the above-described two sheets (diffusion plate 9, and diffusion sheet 10), there is also a case of constituting the optical sheet by one sheet of the sheet, or conversely, a case of constituting the optical sheet by 3 sheets or more thereof.

According to the liquid crystal display apparatus, inner constitution parts of various kinds of boards, a speaker or the like are successively attached to the back face side cabinet 3, finally, the liquid crystal display panel 15 constituted by installing the respective parts shown in Fig. 2 is mounted. Therefore, in processing a connector attached with a wire member extended from a power source supplying circuit board (not illustrated) attached to the back face side cabinet 3, the side frame 8 is utilized, a connector 17 on a side of the cold cathode fluorescent tube is fitted to be attached to a connector holding portion 16 provided at the side frame 8, and the connector attached with the wire member from the power source supplying circuit board is connected to the connector 17 to thereby promote an operability of installation.

That is, although when the liquid crystal display panel 15 is attached to the back face side cabinet 3, it is not easy to lead out the connector attached with wire member extended from the power source supplying circuit board to be processed to connect to the cold cathode fluorescent tube 7, according to the invention, by attaching the connector 17 to the side frame 8, an operation of connecting the power source supplying circuit board can be facilitated.

The back chassis 5 includes an upper side plate 19a and a lower side plate 19b on both sides (upper and lower sides) of a back plate 18 and the upper and lower side plates 19a and 19b are inclined in directions of opening front end sides thereof. That is, substantially a trapezoidal shape is constituted in a sectional view thereof. Further, an edge 20b of the lower side plate 19b is constituted by substantially a channel-like shape in a section thereof and lower ends of the diffusion plate 9 and the diffusion sheet 10 are fitted thereto to be attached to stop thereby. An edge 20a of the upper side plate 19a on one side is constituted by a flat receiving face and mounted with upper ends of the diffusion plate 9 and the diffusion sheet 10.

The reflecting sheet 6 is provided with a similar section one size smaller than that of the back chassis 5 and includes an upper side plate 22a and a lower side plate 22b on both sides of a back plate 21. Therefore, the back plate 21 overlaps the back plate 18, the upper side plate 22a overlaps the upper side plate 19a, and the lower side plate 22b overlaps the lower side plate 19b to laminate. Further, openings of both ends of the reflecting sheet 6 are installed with the side frames 8, 8 substantially in a trapezoidal shape, the side frames 8, 8 are attached with a plurality of pieces of the cold cathode fluorescent tubes 7, 7···, and the connectors 17, 17·· connected with wire members 23, 23·· extended from one end sides of the cold cathode fluorescent tubes 7, 7·· are fitted to be attached to the connector holding portions 16, 16·· formed at the side frame 8. Further, although the reflecting sheet 6 is used in the embodiment in order to increase a brightness of light irradiated from the cold cathode fluorescent tubes 7, 7··, the reflecting sheet 6 can also be saved by, for example, forming the back chassis 5 by color capable of increasing the brightness, or directly coating an inner face side of the back chassis 5 by color easy to be reflected.

The diffusion plate 9 and the diffusion sheet 10 are overlapped to be mounted, the lower ends of the diffusion plate 9 and the diffusion sheet 10 are inserted to the edge 20b of the section substantially in the channel-like shape of the lower side plate 19b of the back chassis 5 as described, and the upper edges are mounted on the flat receiving portion of the edge 20a of the upper side plate 19a. Further, both side ends of the diffusion plate 9 and the diffusion sheet 10 are mounted on upper faces of the side frames 8, 8, projections 24, 24 are formed to project at side ends of the diffusion plate 9 and the diffusion sheet 10, and the projections 24, 24 are fitted to recess grooves provided at the side frames 8, 8 to be attached to stop thereby.

Further, projections 25, 25·· formed at upper ends of the diffusion plate 9 and the diffusion sheet 10 are fitted to grooves provided at the edge 20a of the upper side plate 19a to be attached to stop thereby. In this way, the middle frame 11 is attached to upper end portions of the diffusion plate 9 and the diffusion sheet 10 mounted on the edges 20a, 20b of the back chassis 5 and the side frames 8, 8, and the slender rubber members 14, 14·· are attached to the side frames 8, 8, the edge 20b of the lower side plate 19b and the middle frame 11. Further, the liquid crystal cell 12 is laminated thereon and the front bezel 13 is attached thereto.

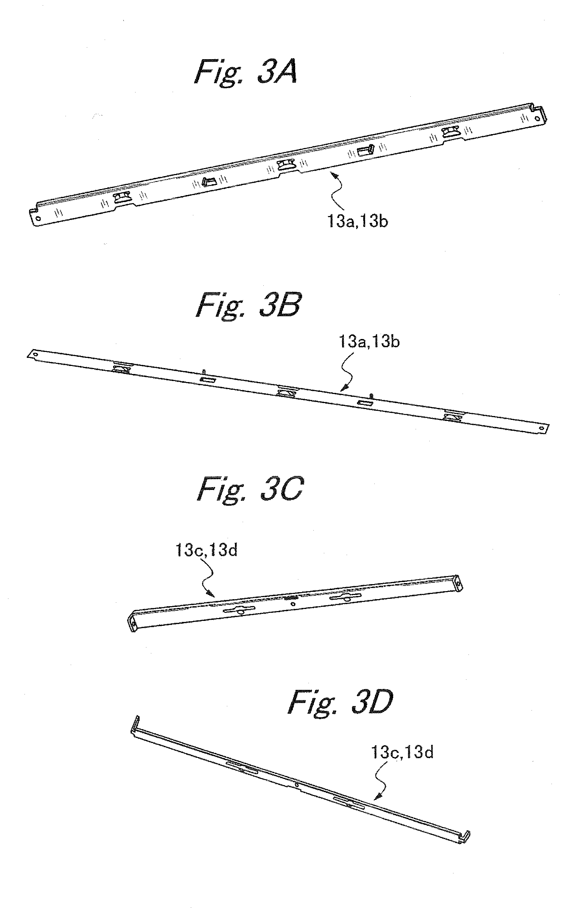

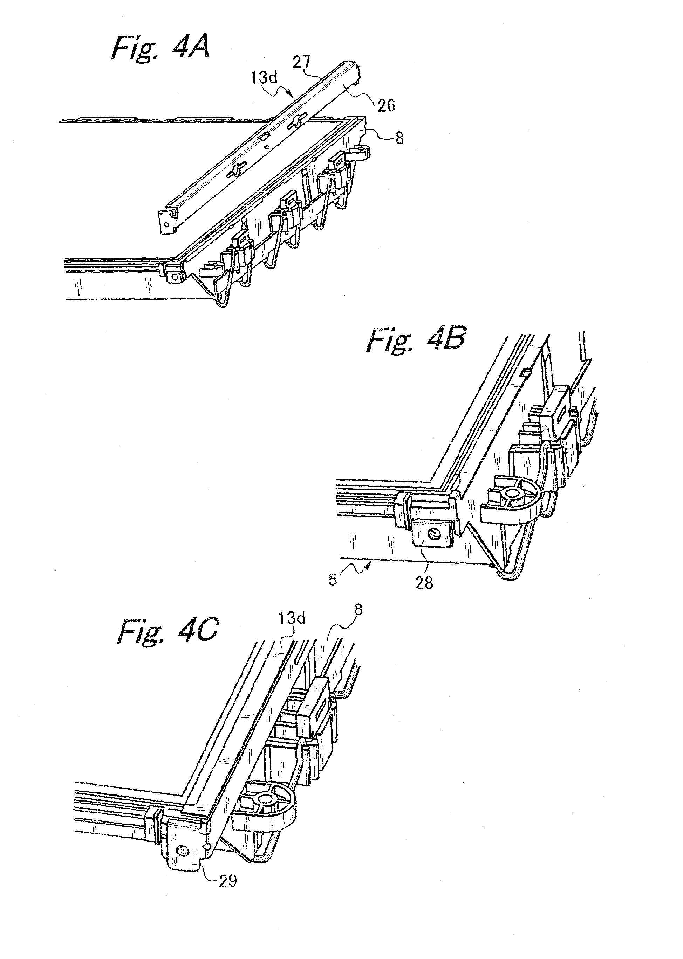

The front bezel 13 is constituted by 4 pieces of bezels of an upper bezel 13a, a lower bezel 13b, a left bezel 13c, and a right bezel 13d, the upper and the lower bezels 13a, 13b are constituted by a common shape, and also the left and the right bezels 13c, 13d are constituted by a common shape. Figs. 3A and 3B illustrate front face side and back face side perspective views of the upper and the lower bezels 13a, 13b and Figs. 3C and 3D illustrate front face side and back face side perspective views of the left and the right bezels 13c, 13d. Meanwhile, as shown by Figs. 4A, 4B, and 4C, the left and the right bezels 13c, 13d can be mounted to tack to the side frames 8, 8 and the liquid crystal cell 12 is tackedly fixed to the outer shape part so as not to be detached therefrom by the tacking.

That is, the left and the right bezels 13c, 13d constitute an L shape section and includes a longitudinal piece 26 and an upper piece 27 and both side ends of the liquid crystal cell 12 are held by the upper pieces 27 by tacking the longitudinal pieces 26 to the side frames 8. Fig. 4A shows a state of tacking the right bezel 13d to the side frame 8, Fig. 4B shows screw fastening portions 28 provided at both ends of the back chassis 5, and Fig. 4C shows a front end portion of a state of attaching to tack the right bezel 13d to the side frame 8. As shown by the drawing, a front end of the right bezel 13d is provided with a fixing portion 29, and the fixing portion 29 is fastened by the screw by matching with the screw fastening portion 28 to the back chassis 5. However, the right bezel 13d is not screwed by itself but screwed along with the lower bezel 13b.

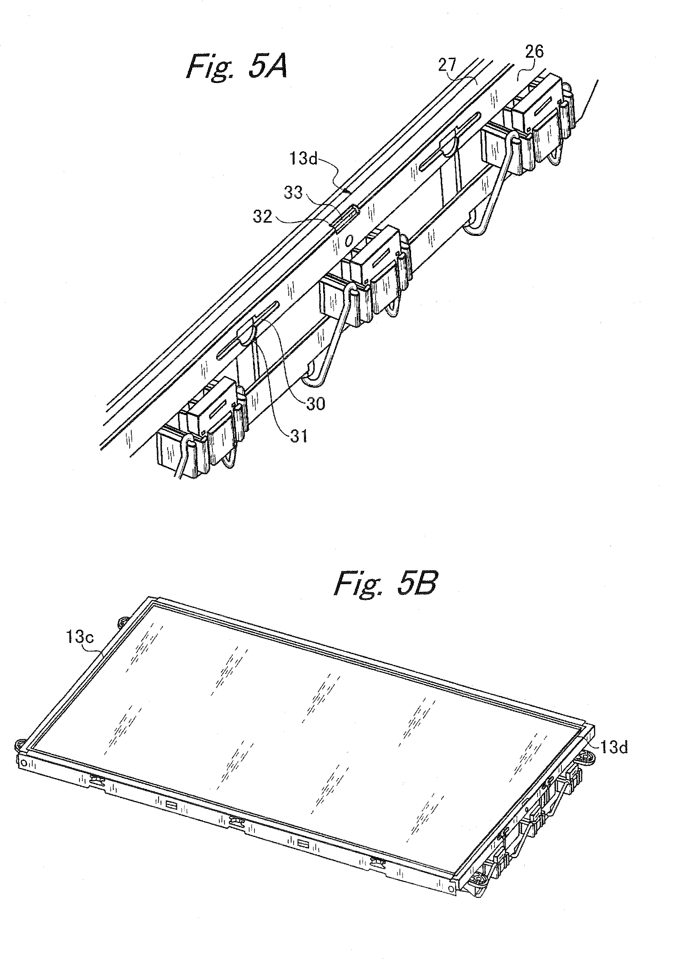

Fig. 5A is a detailed view of a case of tacking the right bezel 13d, the longitudinal piece 26 is formed with a groove hole 30 and the groove hole 30 is fitted with a hook 31 formed at a side face of the side frame 8. Further, a corner portion of the longitudinal piece 26 and the upper piece 27 is formed with other groove hole 32, and a rib 33 provided to project to the side frame 8 is fitted to the groove hole 32 to thereby position the right bezel 13d. That is, tacking is carried out in a state of being correctly positioned. Fig. 5B shows an outlook of the liquid crystal display panel 15 tacked with the left and the right bezels 13c, 13d.

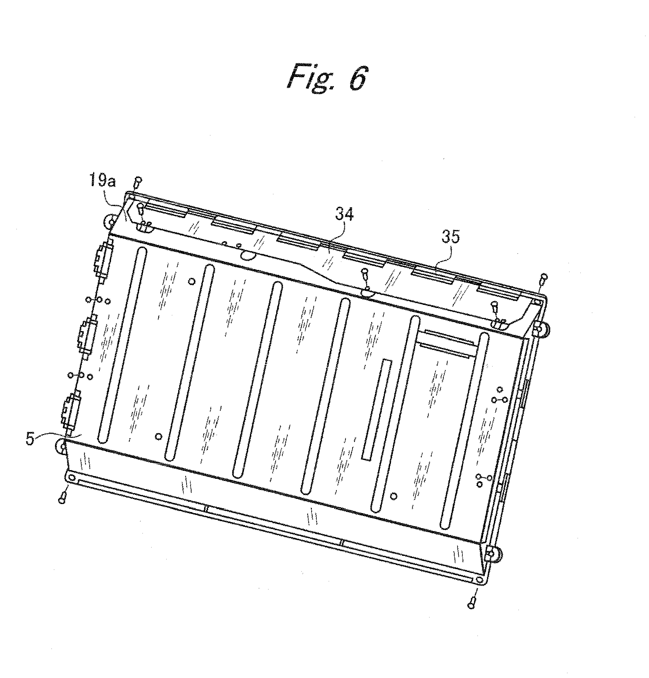

Fig. 6 shows a back face of the liquid crystal display panel 15, and the liquid crystal cell 12 is connected with a drive circuit board 34. Further, the drive circuit board 34 is screwed to the upper side plate 19a of the back chassis 5 and even when the liquid crystal display panel 15 is erected or reversed in the screwing operation, the liquid crystal cell 12 is not detached to drop by being tacked by the left and the right bezels 13c, 13d. Further, although the drive circuit board 34 is connected to the liquid crystal cell 12 by flexible printed wiring plates 35, 35··, in a state of attaching the upper bezel 13a, the flexible printed wiring plate 35 is constricted, and it is difficult to screw to fasten the drive circuit board 34 to a predetermined position. Therefore, the drive circuit board 34 is screwed to the back face of the upper side plate 19a of the back chassis 5 in a state of previously tacking the liquid crystal cell 12 so as not to be detached to drop only by the left and the right bezels 13c, 13d.

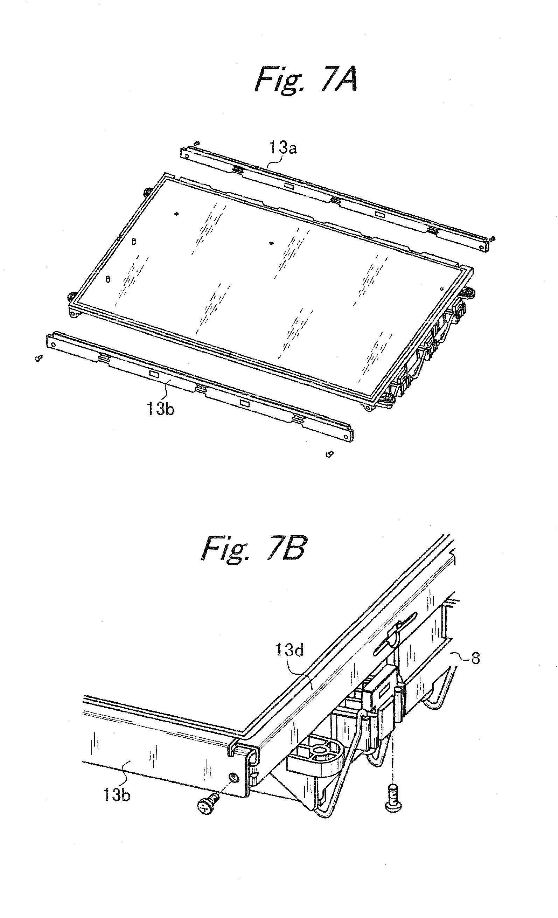

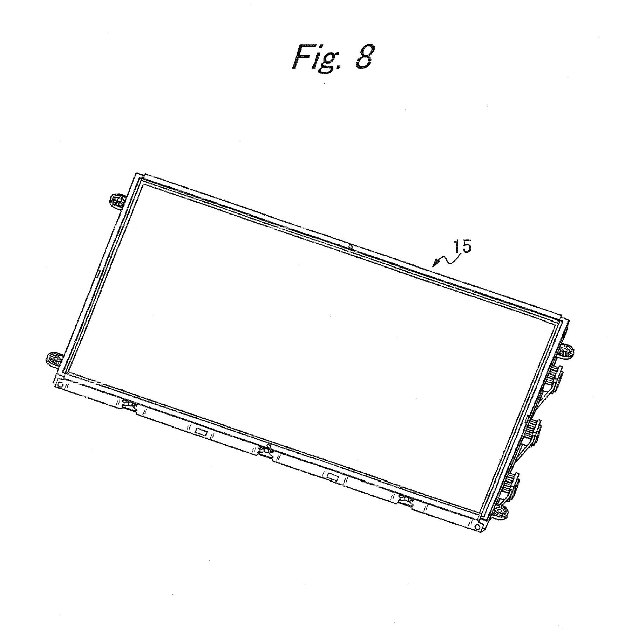

Figs. 7A and 7B show a case of respectively attaching the upper bezel 13a and the lower bezel 13b to upper and lower sides of the liquid crystal display panel 15 shown in Fig. 5B and the upper bezel 13a and the lower bezel 13b are attached to screw to fasten. Fig. 7B is a detailed view of a case of screw to fasten the lower bezel 13b, and a screw can be passed through a hole provided at the front end to screw to fasten the screw fastening portion 28 of the back chassis 5 along with the right bezel 13d. That is, the left and the right bezels 13c, 13d brought into a tacked state are screwed to fasten to the back chassis 5 along with the upper and the lower bezels 13a, 13b. Further, the liquid crystal display panel 15 attached with the left and the right bezels 13c, 13d and the upper and the lower bezels 13a, 13b becomes as shown by Fig. 8.

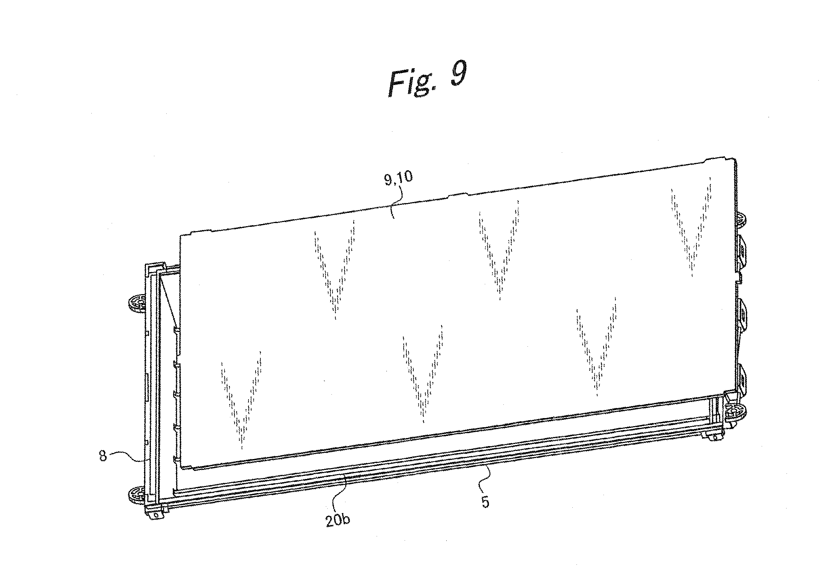

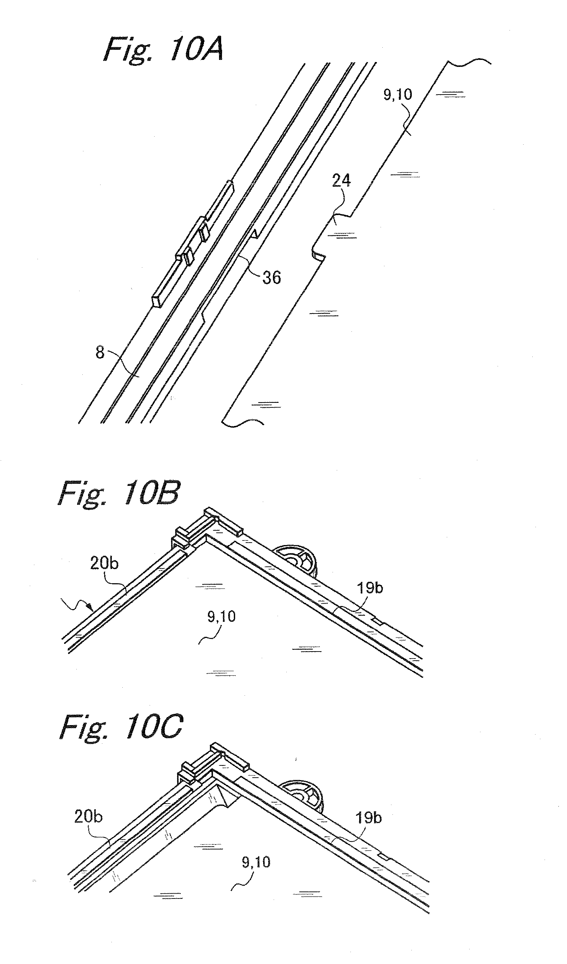

Fig. 9 shows a case of mounting the diffusion plate 9 and the diffusion sheet 10 overlapped to each other, lower ends thereof are fitted to the edge 20a having the section substantially in the channel-like shape formed at the lower side plate 19b of the back chassis 5, and the projections 24 provided at the both side ends are fitted to recess grooves formed at the side frames 8, 8 to be positioned thereby. Further, the upper ends are mounted on the flat receiving portion provided at the edge 20a of the upper side plate 19a. Fig. 10A shows a case of fitting the projection 24 formed to project from the side end to a recess groove 36 provided at the side frame 8 and Fig. 10B shows a case of fitting lower ends of the diffusion plate 9 and the diffusion sheet 10 to the edge 20b having the section substantially in the channel-like shape of the lower side plate 19b of the back chassis 5.

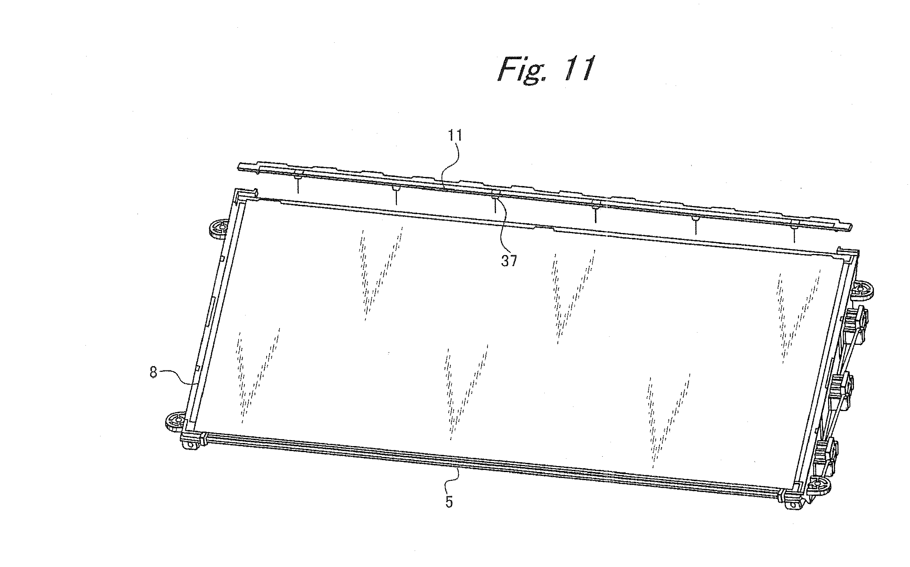

Fig. 11 shows a case of mounting the diffusion plate 9 and the diffusion sheet 10 to thereafter attach the middle frame 11, and the middle frame 11 is attached to the upper end portions of the diffusion plate 9 and the diffusion sheet 10. The middle frame 11 is formed with a plurality of hooks 37, 37··, and the hooks 37, 37·· are attached by being fitted to be locked by grooves formed at the edge 20a of the upper side plate 19a of the back chassis 5. Therefore, the upper ends of the diffusion plate 9 and the diffusion sheet 10 are herd by the middle frame 11 along with the upper side plate edge 20a of the back chassis 5.

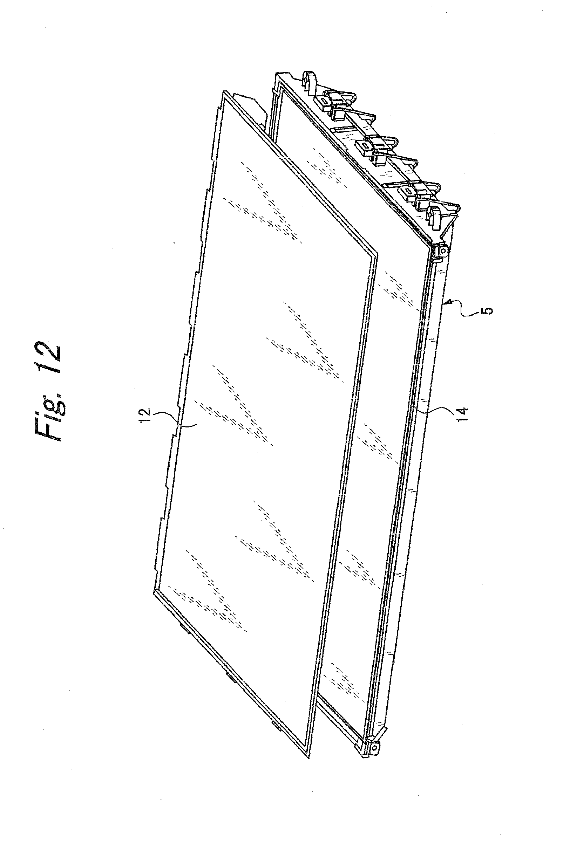

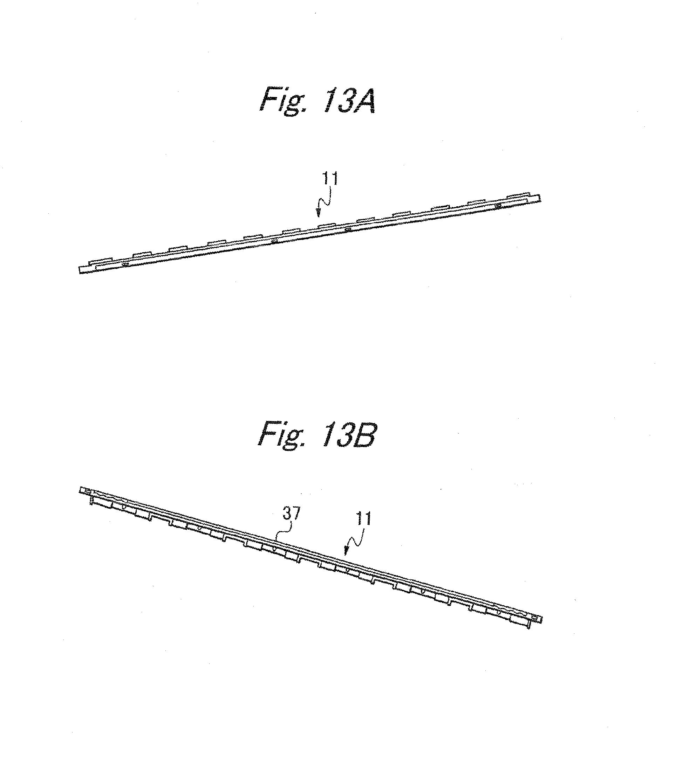

Fig. 12 shows a case of attaching the liquid crystal cell 12, the rubber members 14, 14·· are pasted to the side frames 8, 8, and the edge 20b having the section substantially in the channel-like shape of the lower side plate 19b of the back chassis 5, and the upper face of the middle frame 11, and the liquid crystal cell 12 is mounted under the state. Figs. 13A and 13B are a perspective view showing the front face side and the back face side of the middle frame 11 respectively by themselves, and the plurality of hooks 37, 37·· are provided to project at places. The hooks 37, 37·· are locked by and attached to groove holes provided at the upper side plate edge 20a of the back chassis 5 mounted with the diffusion plate 9 and the diffusion sheet 10.

The middle frame 11 holds upper ends of the diffusion plate 9 and the diffusion sheet 10 mounted on the upper side plate edge 20a of the back chassis 5 and are attached to overlap the upper face of the side frame 8 by forming to extend an end portion thereof. Although the side frame 8 is molded by a resin of white color to reflect light, the middle frame 11 is constituted by black color to prevent leakage of light.

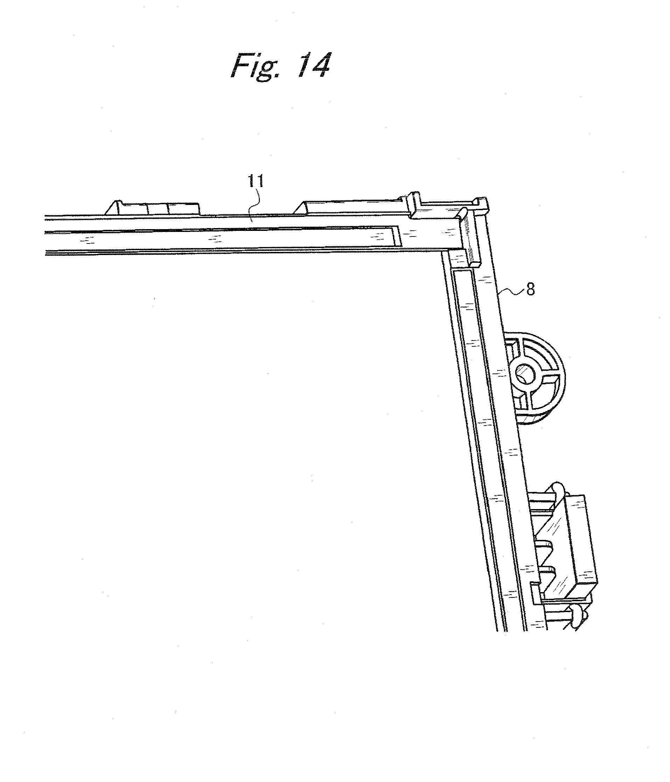

Hence, when both end portions of the middle frame 11 are brought into a state of being butted to inner side faces of the side frame 8, light is leaked from a gap between the middle frame 11 and the side frame 8, or a nonuniformity of color is brought about at a corner of the liquid crystal cell 12. Particularly, in a white screen display, a nonuniformity constituting a black shadow in an optically recognized range of the liquid crystal cell 12 is brought about to constitute a factor of considerably deteriorating a grade. In order to prevent this, the both end portions of the middle frame 11 are extended to bring about a state of being overlapped to the upper face of the side frame 8. Fig. 14 shows a structure of forming a recess portion at an upper face of an end portion of the side frame 8 and fitting the end portion of the middle frame 11 to the recess portion to overlap. By the above-described structure, a gap between parts in the optically recognized range is eliminated and light leakage or color nonuniformity can be prevented.

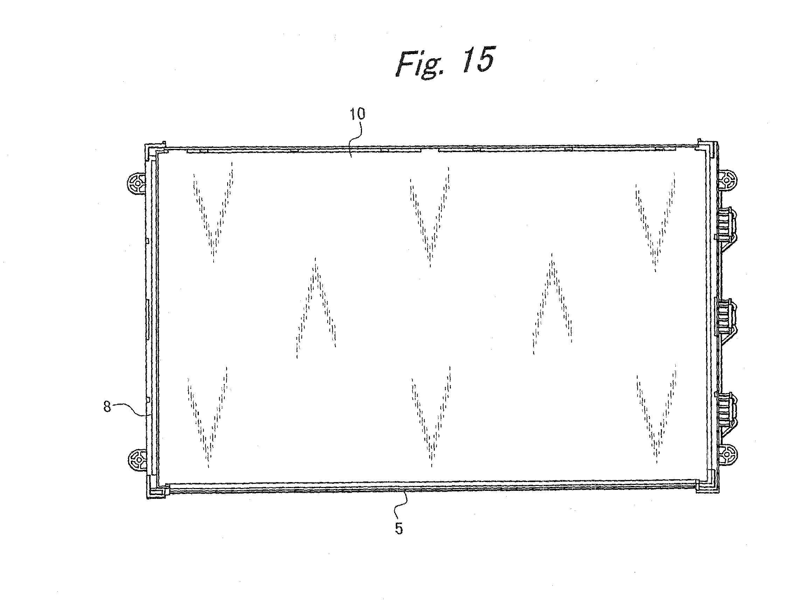

Fig. 15 shows a state before attaching the middle frame 11 to the upper end of the diffusion sheet 10. The diffusion sheet 10 and the diffusion plate 9 are attached by locking the hooks 37, 37·· of the middle frame 11 by the groove holes provided at the edge 20a of the upper side plate 19a of the back chassis 5 mounted with the diffusion sheet 10 and the diffusion plate 9 laminated on a lower side thereof.

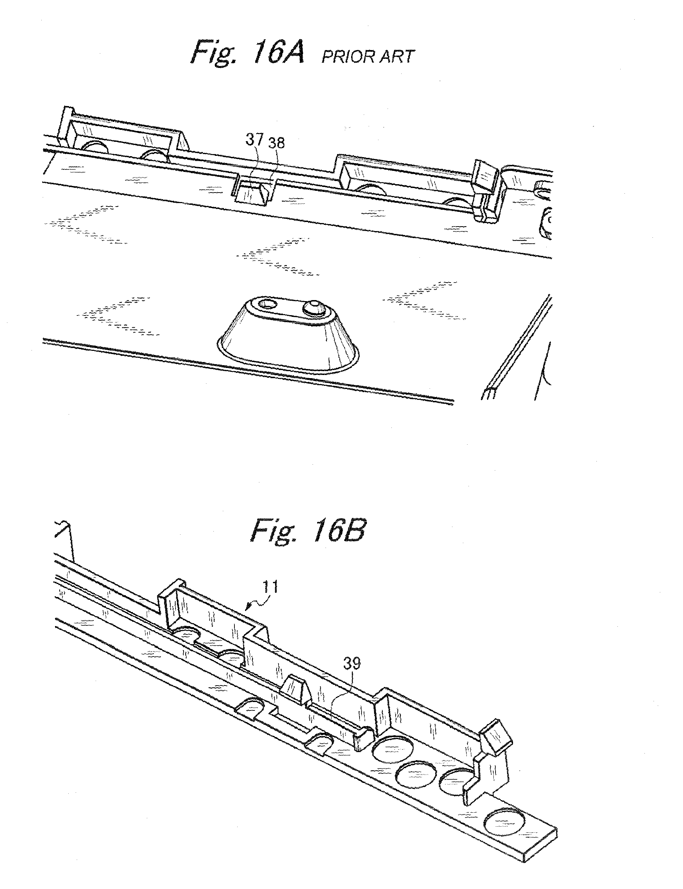

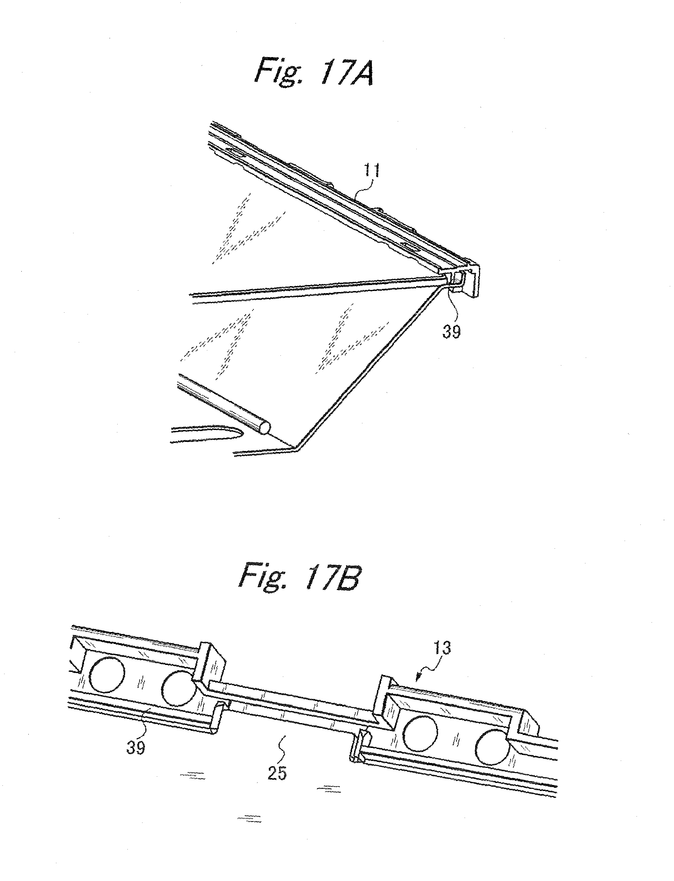

Meanwhile, in a state of locking the hook 37 of the middle frame 11 by the groove hole of the back chassis 5, a gap is produced between the hook 37 and the groove hole and light of the cold cathode fluorescent tubes 7, 7·· is leaked from a surrounding of a hole 38. Fig. 10A shows a relationship between the hook 37 and a groove hole of the background art, hence, according to the invention, a light blocking wall 39 is formed as shown by Fig. 16B. By the light blocking wall 39, as shown by Figs. 17A and 17B, light leaked from the groove hole is blocked and light is not leaked to the back face side of the liquid crystal display panel 15. As a result, irradiation of light to the flexible printed wiring plates 35, 35·· connecting the liquid crystal cell 12 and the drive circuit board 34 can be prevented and an electric erroneous operation can be prevented.

Meanwhile, although according to the embodiment, there is constituted a structure of attaching the middle frame 11 only at upper ends of the diffusion plate 9 and the diffusion sheet 10 to hold, the middle frame 11 can also be attached to lower ends thereof. Therefore, in this case, it is not necessary to constitute the lower side plate edge 20b of the back chassis 5 by the shape of the section substantially in the channel-like shape but similar to the edge 20a of the upper side plate 19a, a structure of forming a flat receiving portion and mounting the lower ends of the diffusion plate 9 and the diffusion sheet 10 is constituted. Further, the groove hole of locking the hook 37 of the middle frame 11 is provided.

## Claims

1. A liquid crystal display panel which is a liquid crystal display panel (15) combined with a light emitting part (7), a back face member (5), a side face member (8), an optical sheet (9), a middle holding member (11), a liquid crystal cell (12), and a front face side holding member (13) as main constituent parts by arranging the back face member (5) on a rear side of the light emitting part (7), arranging the side face members (8) on both sides of the light emitting part, and successively arranging the optical sheet (9), the middle holding member (11) holding the optical sheet, the liquid crystal cell (12) of displaying an image, and the front face side holding member (13) of holding the liquid crystal cell (12) on a front face side of the light emitting part (7), **characterized in that** holding means for holding vicinities of edge portions of two sides opposed to each other of the optical sheet (9) are provided at the side face members (8), second holding means for holding a vicinity of an edge portion of other one side of the optical sheet (9) is provided at the back face member (5), and a vicinity of an edge portion of a side opposed to the side held by the second holding means is held by the middle holding member (11).

2. A liquid crystal display panel which is a liquid crystal display panel (15) combined with a light emitting part (7), a back face member (5), a side face member (8), an optical sheet (9), a middle holding member (11), a liquid crystal cell (12), and a front face side holding member (13) as main constituent parts by arranging the back face member (5) on a rear side of the light emitting part (7), arranging the side face members (8) on both sides of the light emitting part, and successively arranging the optical sheet (9), the middle holding member (11) holding the optical sheet, the liquid crystal cell (12) of displaying an image, and the front face side holding member (13) of holding the liquid crystal cell (12) on a front face side of the light emitting part (7), **characterized in that** first holding means for holding vicinities of edge portions of two sides opposed to each other of the optical sheet (9) are provided at the side face members (8), and vicinities of edge portions of other two sides of the optical sheet (9) are held by the middle holding member (11).

3. The liquid crystal display panel according to Claims 1 or 2, wherein a single or a plurality of locking hook(s) (37) are formed at the middle holding member (11), a flat receiving face of mounting the optical sheet (9) is formed and a groove hole of engaging the locking hook (37) is formed at a position of the back face member (5) of attaching the middle holding member (11).

4. The liquid crystal display panel according to any of Claims 1 to 3, wherein the first holding means is made to constitute recess grooves formed on inner face sides of the side face members (8) opposed to each other, and projections (24) fitted to the recess grooves are formed to extend from both end edges of the optical sheet (9) to outer sides.

5. The liquid crystal display panel according to any of Claims 1, 3, or 4, wherein the second holding means is made to constitute a foldback portion substantially in a channel-like shape in a section thereof formed to extend at an end portion of the back face member (5), and the end edge of the optical sheet (9) is fitted to the foldback portion to be held thereby.

6. The liquid crystal display panel according to any of Claims 1 to 5, wherein the light emitting part (7) is a cold cathode fluorescent tube constituting substantially a linear shape or substantially a U-like shape, and both end portions of the cold cathode fluorescent tube are held by using the side face members (8).

7. The liquid crystal display panel according to any of Claims 1 to 6, wherein the front face side holding member (13) is constituted by divided parts of respectively pinching and holding vicinities of respective sides of the liquid crystal cell (12), and the respective front face side holding members (13) pinch the vicinities of the respective sides of the liquid crystal cell (12) along with the side face members (8), the back face member (5), or the middle holding member (11).

8. The liquid crystal display panel according to Claim 7, wherein shapes of the parts of the front face side holding member (13) disposed at positions symmetric with each other by constituting a reference by a center of the liquid crystal cell (12) are made to be the same.

9. The liquid crystal display panel according to any of Claims 1 to 8, wherein the front face side holding member (13) is fixed to the back face member (5) by using fastening means.

10. The liquid crystal display panel according to any of Claims 1 to 9, wherein both ends of the middle holding member (11) are extended to overlap front face sides of the side face members (8) contiguous to each other.

11. The liquid crystal display panel according to any of Claims 1 to 10, wherein the liquid crystal cell (12) includes a drive circuit board (34) connected from a vicinity of any one side thereof by way of a cable member substantially in a shape of a flat face, a drive circuit board fixing portion for fixing the drive circuit board (34) is formed at the back face member (5), at least a vicinity of an edge portion of one side of the optical sheet (9) the most proximate to the drive circuit board fixing portion is constituted to be held by the middle holding member (11), the middle holding member (11) is formed with a light blocking wall (39), and light leaked to a side of the back face member (5) of the liquid crystal display panel is blocked.
